# EUROPÄISCHE PATENTSCHRIFT

(11) **EP 1 521 790 B1**
(45) Veröffentlichungstag und Bekanntmachung des Hinweises auf die Patenterteilung: **26.10.2005**
(21) Anmeldenummer: 03793701.8
(22) Anmeldetag: 07.08.2003
(51) Int. Cl.: C08G 18/83, C09D 183/04

(54) **SILANVERNETZBARE BESCHICHTUNGSFORMULIERUNGEN**
SILANE-CROSSLINKABLE COATING FORMULATIONS
FORMULATIONS DE REVETEMENT RETICULABLES AU SILANE

(30) Priorität: 14.08.2002 DE 10237270
(43) Veröffentlichungstag der Anmeldung: 13.04.2005
(73) Patentinhaber: Consortium für elektrochemische Industrie GmbH, 81379 München (DE)
(72) Erfinder: STANJEK, Volker, 81479 München (DE); JUNG-ROSSETI, Silva, 80636 München (DE); SCHAUER, Felicitas, 85667 Oberpframmern (DE)
(74) Vertreter: Fritz, Helmut
(86) Internationale Anmeldenummer: PCT/EP2003/008784
(87) Internationale Veröffentlichungsnummer: WO 2004/022625

(56) Entgegenhaltungen:
- EP-A- 1 123 951
- DE-A- 2 155 258
- US-A- 5 025 049
- US-A1- 2001 036 554

## Beschreibung

Die Erfindung betrifft die Verwendung von silanvernetzbaren Beschichtungsformulierungen mit guten Härtungseigenschaften für kratzfeste Beschichtungen.

Derzeit besteht ein großer Bedarf an kratzfesten Beschichtungen für die verschiedensten Anwendungen. Zu nennen wären hier vor allem kratzfeste Decklacke für Kraftfahrzeuge. Hier muß noch zwischen OEM- und Reparaturlacken differenziert werden. Diese unterscheiden sich vor allem in ihrer Prozeßtemperatur: Während OEM-Lacke in der Regel bei 130 - 140 °C eingebrannt werden, müssen sich Reparaturlacke bei höchstens 80 °C - noch optimaler wären 50 °C oder sogar Umgebungstemperatur - verarbeiten lassen.

Bei den derzeitigen kommerziellen Beschichtungen für OEM- und Reparaturlackierungen handelt es sich in der großen Mehrzahl um Systeme, die aus - z.T. geschützten - Isocyanatoligomeren und hydroxyfunktionellen Polymeren bestehen. Diese verfügen jedoch noch über eine große Anzahl verschiedener Nachteile.

So ist zum einen die erreichbare Kratzfestigkeit noch nicht hinreichend, so daß es z.B. in der Waschstraße durch Partikel im Waschwasser zu einer merklichen Verkratzung des Lackes kommt. Auf die Dauer wird dadurch der Glanz des Lackes nachhaltig geschädigt. Hier wären Formulierungen wünschenswert, mit denen sich höhere Lackhärten erreichen lassen.

Ein weiterer Nachteil herkömmlicher Automobildecklacke liegt in der Tatsache, daß es sich um lösungsmittelbasierende Systeme handelt, deren Feststoffanteil sich z.T. sogar unter 60 % bewegt. Auf Grund der hohen Molmassen der unvernetzten Prepolymere und den entsprechend hohen Viskositäten und /oder Glaspunkten derselben ist ein Verzicht auf ein Lösungsmittel dabei kaum möglich.

Schließlich besitzen isocyanatbasierende Systeme den entscheidenden Nachteil, daß die isocyanathaltigen Komponenten toxikologisch nicht unbedenklich sind und zudem über eine starke sensilibisierende Wirkung verfügen. Daher müssen bei ihrem Einsatz umfangreiche Vorsichtsmaßnahmen getroffen werden, um eine Inhalation von Dämpfen oder Aerosolen sowie einen Hautkontakt zu vermeiden. Dies ist vor allem bei Reparaturlack-Anwendungen sehr aufwendig. Der Ersatz von isocyanatbasierenden Lacken durch ein toxikologisch unbedenklicheres System ist in jedem Fall wünschenswert.

Allerdings beschränken sich die potentiellen Anwendungen von kratzfesten Beschichtungen nicht auf Klarlacke für Kraftfahrzeuge, sondern auch in vielen weiteren Bereichen, besonders für die Kratzfestausrüstung von Kunststoffen, insbesondere für transparente Kunststoffe wie entsprechende Polymethacrylate oder Polycarbonate, besteht ein hoher Bedarf an Beschichtungen mit einer überlegenen Kratzfestigkeit.

Auf Grund dieser Nachteile der derzeit kommerziell verfügbaren herkömmlichen isocyanatbasierenden Lacke wird intensiv nach neuen Beschichtungssystemen gesucht, die die oben genannten Nachteile nicht mehr aufweisen. Bei einem vielversprechenden Ansatz wird dabei von organischen Oligomeren oder Polymeren ausgegangen, die über hydrolysierbare Silylgruppen der allgemeinen Formel (1) verfügen.

-Si(OR)₃₋ₓR'ₓ (1)

mit:
- R =: Alkyl- oder Acylrest
- R' =: Alkyl-, Cycloalkyl- oder Arylrest,
- x =: 0 oder 1.

Diese Silylgruppen können in Gegenwart von Wasser - z.B. aus der Luftfeuchtigkeit - unter Ausbildung von Si-OH-Funktionen hydrolysieren und anschließend unter Ausbildung von Si-O-Si-Brücken kondensieren, wodurch die Beschichtung aushärtet. Die Silylgruppen sind dabei in terminaler oder lateraler Position an der ansonsten organischen Hauptkette des Oligomeren oder Polymeren gebunden, wobei die Bindung über eine hydrolysestabile Si-C-Bindung erfolgt..

Polymere oder Oligomere, die über Gruppen der allgemeinen Formel (1) zu dreidimensionalen Netzwerken vernetzen können, werden im folgenden auch als Prepolymere bezeichnet.

In den letzten Jahren wurden auf Basis derartiger Prepolymere verschiedene Beschichtungen entwickelt, die sich neben einer hohen Härte vor allem auch durch eine hervorragende Chemikalien- und Witterungsbeständigkeit auszeichnen.

Bei den hydrolysierbaren Silangruppen der entsprechenden Prepolymere handelt es sich meist um Trimethoxysilylgruppen oder um Alkyldimethoxysilylgruppen (allgemeine Formel 1: R = Methyl, x = 0 oder 1). Zur Herstellung der mit diesen Silaneinheiten versehenen Prepolymere können verschiedene Wege beschritten werden.

So werden u.a. in EP-A-44 049, in EP-A-267 698, in EP-A-549 643 oder in US-A-4,043,953 Beschichtungsformulierungen beschrieben, die Prepolymere enthalten, welche über seitenkettenständige Silangruppen verfügen. Diese Prepolymere werden hergestellt, indem ethylenisch ungesättigte Alkoxysilane mit anderen ungesättigten Verbindungen copolymerisiert werden. Bevorzugt werden dabei Silane enthaltend (Meth-)Acrylgruppen mit anderen (Meth-)Acrylaten zu alkoxysilanfunktionellen Polymethacrylaten copolymerisiert. Selbstverständlich können dabei auch weitere ungesättigte Verbindungen wie z.B. Styrol mit einpolymerisiert werden. Nachteilig an diesem Verfahren sind u.a. die hohen Molmassen, die dabei erhalten werden, so daß sich die entsprechenden Polymere nur als Lösung handhaben lassen.

In EP-A-1 123 951 werden Beschichtungen beschrieben, die neben den oben beschriebenen alkoxysilanfunktionellen Polymethacrylaten sowie weiteren Lackbestandteilen auch noch silanterminierte Prepolymere enthalten, die aus einem Polyol oder Alkohol mit mindestens 2 OH-Funktionen und einem isocyanatfunktionellen Alkoxysilan hergestellt worden sind. Allerdings sind auch die in diesem Patent hergestellten Lacke nicht lösungsmittelfrei.

In EP-A-571 073 werden silanvernetzende Beschichtungen beschrieben, bei denen die silanterminierten Prepolymere durch eine Reaktion aus Isocyanaten mit tertiären Isocyanatgruppen und aminofunktionellen Silanen erhalten werden. Nachteilig dabei ist u.a. die schlechte Zugänglichkeit der tertiären Isocyanate.

Alle diese Versuche zur Herstellung von Beschichtungen mit hoher Härte, die zur Herstellung von Kratzfestbeschichtungen geeignet sind und über eine Kondensation von Alkoxysilylgruppen vernetzen, haben zudem ausnahmslos noch einen weiteren entscheidenden Nachteil. So wird bei der Herstellung der silanfunktionellen Polymere oder Oligomeren ausschließlich von Vinylsilanen der allgemeinen Formel (2) oder aber von Silanen enthaltend Gruppen entsprechend der allgemeinen Formel (3), die zwischen einem Heteroatom und der Silylgruppe über mit einen Propylspacer verfügen, ausgegangen.

Vinyl-Si(OR)₃₋ₓR'ₓ (2)

-X-(CH₂)₃-Si(OR)₃₋ₓR'ₓ (3)

mit:
- R =: Methylrest,
- R' =: Alkyl-, Cycloalkyl-, Aryl- oder Alkylarylrest,
- X =: Sauerstoff, Schwefel oder eine Gruppe der Formel NR",
- R" =: Wasserstoff, Alkyl-, Cycloalkyl, Aryl-, Aminoalkyl- oder Aspartatesterrest,
- x =: 0 oder 1

Die dabei erhaltenen silanfunktionelle Prepolymere verfügen jedoch nur über eine mäßige Reaktivität. Um mit diesen Komponenten eine hinreichende Härtungsgeschwindigkeit auch bei moderaten Temperaturen von maximal 80 °C zu erreichen, ist der Zusatz von schwermetallhaltigen Katalysatoren - meist organischen Zinnverbindungen - unerläßlich. Selbst bei höheren Einbrenntemperaturen von 130-150 °C kann oft nicht auf schwermetallhaltige Katalysatoren verzichtet werden.

Die Vermeidung von schwermetallhaltigen Katalysatoren - oder zumindest eine deutliche Reduzierung der einzusetzenden Katalysatormenge - wäre zum einen unter toxikologischen Gesichtspunkten wünschenswert, zum anderen kann der Katalysator auch die Lagerstabilität der Lackformulierung als auch die Beständigkeit des ausgehärteten Lackes herabsetzen. Aus denselben Gründen ist eine Katalyse der Lackhärtung durch starke organische Basen wie 1,4-Diazabicyclo[5.4.0]undec-7-en (DBU) ebenfalls von Nachteil.

Zudem lassen sich mit den mäßig reaktiven Silanen entsprechend der allgemeinen Formeln (2) oder (3) lediglich methoxyvernetzende Prepolymere herstellen, d.h. Prepolymere, die bei ihrer Aushärtung Methanol freisetzen. Ethoxyvernetzende Systeme, die bei Ihrer Härtung das toxikologisch unbedenklichere Ethanol freisetzen, sind nicht möglich, da Verbindungen entsprechend der allgemeinen Formeln (2) oder (3) mit R = Ethyl auch in Gegenwart hoher Katalysatorkonzentrationen nicht über hinreichende Reaktivitäten verfügen würden.

In WO 92/20463 wird vorgeschlagen, den Härtungskatalysator nicht dem Decklack mit den darin enthaltenen silanfunktionellen Prepolymeren zuzusetzen, sondern einem Basislack. In einer Zweischichtlackierung wird dabei zunächst der katalysatorhaltige Basislack aufgetragen, der anschließend mit dem Decklack überzogen wird. Beide Lackschichten werden dabei gemeinsam getrocknet bzw. gehärtet, wobei der Katalysator aus dem Basislack in die Decklackschicht diffundiert. Auf diese Weise kann zwar das Problem der mäßigen Lagerstabilität einer einkomponentigen Decklacklösung gelöst werden, ein Verzicht auf schwermetallhaltige Katalysatoren oder eine Reduzierung der Katalysatormenge kann so jedoch nicht erreicht werden.

In DE-A-21 55 258 werden silanterminierte Prepolymere beschrieben, die über vernetzbare Endgruppen der allgemeinen Formel (4) verfügen

-Y-CO-NH-Q-NH-CO-NR"-CH₂-Si(OR)_{3-z}R'_{z} (4)

mit :
- Q =: Alkylen-, Cycloalkylen-, Arylen- oder Alkylarylenrest,
- R =: Alkylrest, bevorzugt Methyl- oder Ethylrest,
- R' =: Alkyl-, Cycloalkyl-, Aryl- oder Alkylarylrest,
- R" =: Wasserstoff, Alkyl-, Cycloalkyl-, Aryl- oder Aminoalkylrest,
- Y =: Sauerstoff oder eine Gruppe der Formel NR"
- x =: 0 oder 1

Diese Prepolymere zeichnen sich durch eine sehr hohe Reaktivität der Alkoxysilylgruppen aus, so daß diese Prepolymere auch in der Abwesenheit von schwermetallhaltigen Katalysatoren an der Luft aushärten. Auch ethoxyvernetzende Prepolymere mit derartigen Endgruppen werden beschrieben. Jedoch sind die in DE-A-21 55 258 beschriebenen Prepolymere lediglich zur Herstellung von elastischen, nicht jedoch zur Herstellung von kratzfesten Beschichtungen geeignet. So ist bei diesen Materialien jede vernetzungsfähige Silylgruppe entweder über zwei Harnstoffeinheiten oder aber über eine Harnstoffeinheit und eine Urethaneinheit an das Prepolymer gebunden. Harnstoffeinheiten und - wenngleich in geringerem Ausmaß - auch Urethaneinheiten erhöhen jedoch auf Grund ihrer Fähigkeit zur Ausbildung von Wasserstoffbrückenbindungen die Viskosität sowie auch den Glaspunkt der entsprechenden Polymere. Somit können Prepolymere mit vernetzbaren Endgruppen der allgemeinen Formel (4) entweder nur eine geringe Dichte an vernetzbaren Alkoxysilylgruppen besitzen, oder sie sind auf Grund ihrer hohen Dichte an Harnstoff- und Urethangruppen glasartig fest und nur in stark verdünnter Lösung zu handhaben. Dementsprechend besitzen sämtliche in De-A-21 55 258 beschriebenen Prepolymere mit Endgruppen der allgemeinen Formel (4) entweder nur einen sehr geringen Anteil an Alkoxysilylgruppen von weniger als 3 Gew.-%, oder sie werden nur in starker Verdünnung als 30 %-ige toluolische Lösung hergestellt und verwendet. Zur Herstellung von hochvernetzten und damit kratzfesten Beschichtungen aus lösungsmittelarmen Lackformulierungen sind diese Prepolymere ungeeignet.

Zudem verfügen die in DE-A-21 55 258 beschriebenen Verbindungen mit vernetzbaren Endgruppen der allgemeinen Formel (4) über erhebliche Stabilitätsprobleme. So ist die Reaktivität dieser Alkoxysilylgruppen zwar hoch, aber weder kontrollierbar noch modulierbar. Dementsprechend sind diese Verbindungen nur unter großen Problemen und auch nur in alkohol- und säureanhydridhaltigen Lösungen lagerstabil und an der Luft handhabbar. Entsprechend problematisch gestaltet sich ihre weitere Verarbeitung.

Aufgabe der Erfindung war daher die Bereitstellung einer harten Beschichtung mit guter Kratzfestigkeit, die sich aus alkoxysilanfunktionellen Prepolymeren herstellen läßt und die Beschränkungen entsprechend des Standes der Technik nicht aufweist.

Gegenstand der Erfindung ist die Verwendung von Beschichtungsformulierungen (B), die zu Beschichtungen mit einer Bleistifthärte nach ISO 15184 von mindestens HB aushärtbar sind, welche Prepolymere (A) enthalten, welche über Alkoxysilanfunktionen der allgemeinen Formel (6)

-X-CH₂-Si(OR)₃₋ₓR'ₓ (6)

verfügen, in der
- **R**: Wasserstoff, Alkyl-, Cycloalkyl- oder Arylrest mit jeweils 1 bis 6 C-Atomen, wobei die Kohlenstoffkette durch nicht benachbarte Sauerstoff-, Schwefel- oder NR"-Gruppen unterbrochen sein kann,
- **R'**: Alkyl-, Cycloalkyl-, Aryl- oder Arylalkylrest mit jeweils 1 bis 12 C-Atomen, wobei die Kohlenstoffkette durch nicht benachbarte Sauerstoff-, Schwefel- oder NR"-Gruppen unterbrochen sein kann,
- **R**": Wasserstoff, Alkyl-, Cycloalkyl-, Aryl-, Aminoalkyl oder Aspartatsäureesterrest,
- X: Sauerstoff, Schwefel oder eine Gruppe der allgemeinen Formel (20) und

-O-CO-NR"- (20)
- **x**: 0 oder 1 bedeuten,
für krafzfeste Beschichtungen.

Die härtbaren Beschichtungsformulierungen (B) können lösungsmittelarm- oder lösungsmittelfrei eingesetzt werden. Sie können hochreaktiv eingestellt werden und härten zu einer kratzfesten Beschichtung aus, die eine Bleistifthärte nach ISO 15184 von mindestens HB aufweist.

Insbesondere wird bei der Herstellung der Prepolymere (A) nicht von Aminosilanen der allgemeinen Formel (5)

NHR"-CH₂-Si(OR)₃₋ₓR'ₓ (5)

ausgegangen, wobei **R, R', R"** und **x** die bei der allgemeinen Formel (6) beschriebenen Bedeutungen aufweisen. Bei wirtschaftlich interessanten Anwendungen würden diese Aminosilane stets durch eine Reaktion mit Isocyanatgruppen unter Ausbildung einer Harnstoffeinheit an das Prepolymer gebunden werden.

Der Erfindung liegt zum einen die folgende, überraschende Entdeckung zugrunde: So wurde gefunden, daß Prepolymere (A) mit Alkoxysilylgruppen der allgemeinen Formel (1), welche über einen Methylspacer an ein Heteroatom gebunden sind, über extrem hohe Reaktivitäten gegenüber Feuchtigkeit verfügen können. Überraschenderweise treten diese hohen Reaktivitäten jedoch nur dann auf, wenn saure oder basische Verbindungen - wie z.B. Aminosilane der allgemeinen Formel (5) - auch nur in Spuren zugegen sind. Eine extrem hohe Reaktivität der Prepolymere (A) ist bei der Aushärtung der prepolymerhaltigen Beschichtungen zwar durchaus vorteilhaft, die Handhabbarkeit dieser hochreaktiven Mischungen ist jedoch äußerst problematisch. In Abwesenheit von jeglichen Säuren oder Basen sind die Prepolymere (A) jedoch kaum noch reaktiv und lassen sich somit problemlos handhaben und lagern. Dies läßt auch eine gute Modulier- bzw. Steuerbarkeit der Reaktivität von den Prepolymeren (A) durch die Zugabe geeigneter - z.B. schwach basischer oder saurer - Katalysatoren zu.

Zum anderen liegt dieser Erfindung eine weitere, ebenfalls überraschende Entdeckung zugrunde: So lassen sich lösungsmittelfreie bzw. lösungsmittelarme Beschichtungsformulierungen (B) mit Mischungen von Prepolymeren (A) mit einer sehr hohen Dichte an Alkoxysilylgruppen der allgemeinen Formel (1), welche über einen Methylspacer an ein Heteroatom gebunden sind, auch mit niedrigen Viskositäten erzeugen, wenn es sich bei dem Heteroatom nicht um ein Stickstoffatom handelt, das Teil einer Harnstoffgruppe ist. Durch die niedrige Viskosität lassen sich diese Prepolymere (A) gut in lösungsmittelarmen oder sogar in lösungsmittelfreien Beschichtungssystemen verwenden. Derartige Beschichtungsformulierungen (B) mit Mischungen von Prepolymeren (A) mit einer hohen Dichte an Alkoxysilylgruppen der allgemeinen Formel (1) bilden bei ihrer Aushärtung Netzwerke mit einer hohen Netzwerkdichte, so daß sehr harte Materialien entstehen, die für kratzfeste Beschichtungen in hohem Maße geeignet sind.

Bei der Gruppe **R** handelt es sich bevorzugt um Methyl- oder Ethylreste. Bei der Gruppe **R'** handelt es sich bevorzugt um einen Methyl-, Ethyl- oder Phenylrest. Bei der Gruppe **X** handelt es sich bevorzugt um Sauerstoff oder eine Gruppe der allgemeinen Formel (20). **R"** weist vorzugsweise 1 bis 12 C-Atome auf. Bei **R"** handelt es sich bevorzugt um Wasserstoff.

Die Hauptketten der alkoxysilanterminierten Polymere (A) können verzweigt oder unverzweigt sein. Die mittleren Kettenlängen können beliebig entsprechend der jeweils gewünschten Eigenschaften sowohl der unvernetzten Mischung als auch der ausgehärteten Beschichtung angepaßt werden. Sie können aus unterschiedlichen Bausteinen aufgebaut sein. So kann es sich beispielsweise um Polyether, Polyester, Polyurethane, Polyharnstoffe, Polyacrylate und -methacrylate, Polycarbonate, Polystyrole, Polysiloxane, Polysiloxan-Urea/Urethan-Copolymere, Polyamide, Polyvinylester, Polyvinylhydroxide oder Polyolefine wie z.B. Polyethylen, Polybutadien, Ethylen-Olefincopolymere oder Styrol-Butadiencopolymere handeln. Selbstverständlich können auch beliebige Mischungen oder Kombinationen aus Polymeren mit verschiedenen Hauptketten eingesetzt werden. Ebenso können auch beliebige monomere oder oligomere Moleküle mit einer oder mehreren Alkoxysilanfunktionen der allgemeinen Formel (6) als Prepolymere (A) verwendet werden. Auch hier sind beliebige Mischungen möglich.

Die Alkoxysilangruppen der allgemeinen Formel (6) können sich dabei terminal an den Kettenenden der verzweigten oder unverzweigten Hauptketten der Prepolymere (A) befinden. Dabei können sämtliche oder auch nur ein Teil der Kettenenden mit Alkoxysilangruppen der allgemeinen Formel (6) versehen sein. Des weiteren können sich die Alkoxysilangruppen der allgemeinen Formel (6) aber auch lateral an den Seiten der verzweigten oder unverzweigten Hauptketten der Prepolymere (A) befinden.

Bei einer bevorzugten Ausführung der Erfindung werden die silanfunktionellen Prepolymere (A) hergestellt unter Einsatz von Silanen der allgemeinen Formeln (7)und(8):

CH₂=CHW-CO-O-CH₂-Si(OR)₃₋ₓR'ₓ (7),

Propylenoxid-O-CH₂-Si(OR)₃₋ₓR'ₓ (8),

wobei **W** für eine CH₃-Gruppe oder Wasserstoff steht und Ausgegangen, wobei **R, R'** und **x** die bei der allgemeinen Formel (6) beschriebenen Bedeutungen aufweisen.

Aus dem Silan der allgemeinen Formel (7) lassen sich Prepolymere (A) mit lateralen Alkoxysilangruppen der allgemeinen Formel (6) durch eine Copolymerisation mit anderen ungesättigten Verbindungen, wie z.B. Acrylsäureestern, Methacrylsäureestern oder Styrol, herstellen.

Aus dem Silan der allgemeinen Formel (8) lassen sich Prepolymere (A) mit lateralen Alkoxysilangruppen der allgemeinen Formel (6) durch eine Copolymerisation mit anderen Epoxiden, wie z.B. Etylenoxid oder Propylenoxid herstellen. Aus demselben Silan lassen sich Prepolymere mit terminalen Alkoxysilangruppen der allgemeinen Formel (6) herstellen, indem man dieses Silan mit Polyolen mit terminalen OH-Gruppen oder mit monomeren Alkoholen - bevorzugt mit mindestens zwei OH-Gruppen - umsetzt.

Bei einer besonders bevorzugten Ausführung der Erfindung werden die silanfunktionellen Prepolymere (A) hergestellt unter Einsatz von Silanen (A1) der allgemeinen Formel (9):

OCN-CH₂-Si(OR)₃₋ₓR'ₓ (9),

wobei **R, R'** und **x** die bei der allgemeinen Formel (6) beschriebenen Bedeutungen aufweisen.
Das Isocyanatosilan (A1) wird mit einem OH-funktionellen Prepolymer (A2)umgesetzt. Hinsichtlich der Kettenlänge und des Verzweigungsgrades der OH-funktionellen Prepolymere (A2) gibt es keinerlei Beschränkungen.

Handelt es sich bei dem OH-funktionellen Prepolymer (A2) um eine polymere oder oligomere Verbindung mit lateralen OH-Funktionen, so werden Prepolymere (A) mit seitenkettenständigen Alkoxysilangruppen der allgemeinen Formel (6) erhalten. Handelt es sich bei dem OH-funktionellen Prepolymer (A2) hingegen um eine polymere oder oligomere Verbindung mit terminalen OH-Funktionen, so werden Prepolymere (A) erhalten, die mit Alkoxysilangruppen der allgemeinen Formel (6) terminiert sind. Ebenso können bei der Synthese der Prepolymere (A) neben dem Silan (A1) auch beliebige Mischungen von OH-funktionellen Prepolymeren (A2) und/oder monomeren Alkoholen eingesetzt werden.

Ist die eingesetzte molare Menge des Silans (A1) dabei kleiner oder aber genauso groß wie die molare Anzahl der OH-Terminierungen des Prepolymeren (A2), so werden NCO-freie Prepolymere (A) erhalten.

Ist das OH-funktionelle Prepolymer (A2) aus einem oder mehreren Polyolen (A21) - bevorzugt mit mindestens zwei OH-Funktionen - sowie Di- und/oder Polyisocyanaten (A22) aufgebaut, so ist es nicht unbedingt erforderlich, daß aus diesen Bausteinen (A21, A22) zunächst das OH-funktionelle Prepolymer (A2) hergestellt wird, welches anschließend mit dem Silan (A1) zum fertigen Prepolymer (A) umgesetzt wird. So ist hier auch eine Umkehrung der Reaktionsschritte möglich, bei der die Polyole (A21) zunächst mit dem Isocyanatosilan (A1) umgesetzt werden, und die dabei erhaltenen Verbindungen erst anschließend mit dem Di- oder Polyisocyanat (A22) zum fertigen Polymer (A) umgesetzt werden.

Beispiele für gebräuchliche Diisocyanate (A22) sind Hexamethylendiisocyanat (HDI), Isophoron-diisocyanat (IPDI) Diisocyanatonaphthalin (NDI) Diisocyanato-diphenylmethan (MDI), sowohl in Form von rohem oder technischem MDI als auch in Form reiner 4,4' bzw. 2,4' Isomeren oder deren Mischungen sowie Tolylendiisocyanat (TDI) in Form seiner verschiedenen Regioisomere. Beispiele für Polyisocyanate (A22) sind polymeres MDI (p-MDI), Triphenylmethantriisocyanat, Biuret-triisocyanate sowie sämtliche Isocyanurate der oben genannten Diisocyanate. Besonders bevorzugt werden dabei aliphatischen Diisocyanate wie IPDI oder HDI sowie aus diesen Diisocyanaten gebildete Isocyanurate oder Biuretverbindungen.

Als Polyole (A2 oder A21)für die Herstellung der Prepolymere (A) eignen sich besonders aromatische und aliphatische Polyesterpolyole und Polyetherpolyole sowie hydroxylgruppenhaltige Polyacrylate, wie sie in der Literatur vielfach beschrieben sind. Prinzipiell können aber sämtliche polymeren, oligomeren oder auch monomeren Alkohole mit zwei oder mehr OH-Funktionen eingesetzt werden.

Anstelle bzw. neben den OH-funktionellen Prepolymeren (A2) und/oder (A21) können auch sämtliche monomere Alkohole mit einer oder - bevorzugt - mindestens zwei OH-Funktionen bei der Herstellung der Prepolymere (A) eingesetzt werden. Als Beispiele wären hier Verbindungen wie Ethylenglycol, Glycerin, die verschiedenen Propan-, Butan-, Pentan- oder Hexandiolisomeren, die verschiedenen Pentosen und Hexosen sowie deren Derivate oder auch Petaerythrotetraol zu nennen. Selbstverständlich können auch Mischungen aus verschiedenen polymeren und/oder monomeren Alkoholen als Polyolkomponenten (A2) und/oder (A21) eingesetzt werden.

Des weiteren können neben den OH-funktionellen Polyolen (A2, A21) bei der Herstellung der Prepolymere (A) auch noch polymere oder monomere Amine - bevorzugt mit mindestens 2 NH-Funktionen - verwendet werden. Des weiteren ist auch ein Einsatz von hydroxyalkyl- oder aminoalkylterminierten Polydiorganosiloxanen möglich.

Bei der Herstellung der Prepolymere (A) aus Isocyanatosilanen (A1) und OH-funktionellen Prepolymeren (A2) werden bevorzugt Katalysatoren eingesetzt. Als Katalysatoren sind dabei sämtliche aus der Polyurethanchemie bekannten Verbindungen geeignet, welche die Addition von Alkoholen an Isocyanate katalysieren. Allerdings kann bei der Herstellung der Prepolymere (A) aus Isocyanatosilanen (A1) und OH-funktionellen Prepolymeren (A2) auch ganz auf einen Katalysator verzichtet werden. Allerdings ist es dann vorteilhaft, die Prepolymerherstellung bei erhöhten Temperaturen durchzuführen, um allzu lange Reaktionszeiten zu vermeiden.

Bei einem besonders bevorzugten Verfahren werden die Polymere (A) aus Isocyanatosilanen (A1) und OH-funktionellen Prepolymeren (A2) in Gegenwart eines Zinnkatalysators hergestellt. Beispiele für Zinnkatalysatoren sind organische Zinnverbindungen, wie Dibutylzinndilaurat, Dioctylzinndilaurat, Dibutylzinndiacetylacetonat, Dibutylzinndiacetat oder Dibutylzinndioctoat. Bevorzugt wird dabei Dibutylzinndilaurat eingesetzt. Dabei werden bevorzugt äußerst kleine Konzentrationen an Zinnkatalysatoren eingesetzt, so daß der Zinngehalt in den resultierenden Polymeren (A) < 500 ppm, bevorzugt < 100 ppm und besonders bevorzugt < 50 ppm ist.

Dem Einsatz eines Zinnkatalysators bei der Synthese der . Polymere (A) liegt die überraschende Entdeckung zugrunde, daß Zinnkatalysatoren die Härtungsreaktion der Polymeren (A) nur sehr schlecht katalysieren. Dieser Befund ist vor allem deshalb so auffällig, da Zinnverbindungen bei herkömmlichen silanterminierten Polymeren mit Silanterminierungen ungleich der allgemeinen Formel (6) besonders leistungsfähige Katalysatoren darstellen. Die Polymere (A) hingegen sind auch noch in der Gegenwart der angegebenen Zinnkatalysatorkonzentrationen hinlänglich reaktionsträge und werden erst durch den Zusatz eines geeigneten basischen Katalysators aktiviert.

Zur Erzielung einer schnellen Aushärtung der Beschichtungsformulierungen (B) können diese neben den alkoxysilanfunktionellen Prepolymeren (A) auch Katalysatoren (K) enthalten, welche die Kondensationsreaktionen der Alkoxysilangruppen der allgemeinen Formel (6) beschleunigen. Neben den bereits oben beschriebenen Zinnkatalysatoren kommen hier auch Titanate, z.B. Titan(IV)isopropylat, Eisen(III)-Verbindungen, z.B. Eisen(III)-acetylacetonat, oder auch Amine,insbesondere organische Amine, z.B. Aminopropyltri(m)ethoxysilan, N-(2-Aminoethyl)-aminopropyltri(m)ethoxysilan, N-Alkylaminopropyltri(m)ethoxysilane, N,N-dialkylaminopropyltri(m)ethoxysilane, N,N-dialkylaminomethyltri(m)ethoxysilane, Triethylamin, Tributylamin, 1,4-Diazabicyclo[2,2,2]octan, Bis-(N,N-dimethylaminoethyl)-ether, N,N-Bis-(N,N-dimethyl-2-aminoethyl)-methylamin, N,N-Dimethylcyclohexylamin, N,N-Dimethylpiperazine, Tris-(3-N,N-dimethylaminopropyl)-amin, N,N-Dimethylphenylamin, N,N-Dimethylenthanolamin, N-Ethylmorpholinin, N-Methylmorpholinin, 2,2-Dimorpholinodiethylether etc., eingesetzt werden. Aber auch zahlreiche weitere organische und anorganische Schwermetallverbindungen sowie organische und anorganische Lewissäuren oder -basen können hier eingesetzt werden.

Selbstverständlich ist es möglich, daß dieselben Katalysatoren, die bereits bei der Synthese des Prepolymers (A) zugegeben worden waren, auch als Härtungskatalysatoren (K) dienen.

Besonders bevorzugte Katalysatoren (K) stellen tertiäre Amine, z.B. die oben aufgeführten tertiären Aminoverbindungen, dar. Auf Grund der sterischen Hinderung am Stickstoffatom verfügen diese tertiäre Amine über eine moderate katalytische Aktivität, so daß Beschichtungen mit guten Härtungseigenschaften bei gleichzeitig hohen Lagerstabilitäten und guten Verarbeitungseigenschaften resultieren. Über das Ausmaß der sterischen Abschirmung am Stickstoffatom läßt sich dabei die katalytische Wirksamkeit des Katalysators (K) steuern.

Die Katalysatoren (K) werden bevorzugt in Konzentrationen von 0,01-10 Gew.-%, besonders bevorzugt in Konzentrationen von 0,01-1 Gew.-%, bezogen auf die Beschichtungsformulierung (B), eingesetzt. Die verschiedenen Katalysatoren können sowohl in reiner Form als auch als Mischungen verschiedener Katalysatoren eingesetzt werden.

Des weiteren können die Beschichtungsformulierungen (B) zur Erzeugung der Beschichtungen auch einen oder mehrere Reaktivverdünner (R) enthalten. Als Reaktivverdünner (R) sind prinzipiell alle niedermolekularen Verbindungen mit einer Viskosität von vorzugsweise höchstens 5 Pas, insbesondere höchstens 1 Pas bei 20°C geeignet, die über reaktive Alkoxysilylgruppen verfügen, über die sie während der Aushärtung der Beschichtung mit in das entstehende dreidimensionale Netzwerk eingebaut werden können. Der Reaktivverdünner (R) kann dabei gegebenenfalls nicht nur zur Erniedrigung der Viskosität dienen, sondern auch zur Verbesserung der Eigenschaften der ausgehärteten Beschichtung. So kann er z.B. auch zu einer nochmaligen Steigerung der Dichte an Alkoxysilylgruppen in der Beschichtungsformulierung (B) und damit zu einer nochmaligen Steigerung der Netzwerkdichte in der ausgehärteten Beschichtung führen. Dies kann gegebenenfalls eine nochmals höhere Härte derselben zur Folge haben. Auch kann der Reaktivverdünner (R) gleichzeitig als Haftvermittler dienen und so die Haftung der Beschichtung auf dem jeweiligen Untergrund verbessern.

Bevorzugte Reaktiwerdünner (R) sind die preisgünstigen Alkyltri(m)ethoxysilane, wie Methyltrimethoxysilan, Methyltriethoxysilan sowie Vinyltrimethoxysilan, Vinyltriethoxysilan, Phenyltrimethoxysilan, Phenyltriethoxysilan sowie Tetraethylsilan. Auch Teilhydrolysate dieser Verbindungen können als Reaktivverdünner (R) eingesetzt werden.

Ebenfalls bevorzugt werden Reaktivverdünner (R), die über Alkoxysilanfunktionen der allgemeinen Formel (6) verfügen, z.B. Reaktivverdünner (R) der allgemeinen Formeln (10) oder (11):

R"O-CH₂-Si(OR)₃₋ₓR'ₓ (10),

R"-O-CO-NH- CH₂-Si(OR)₃₋ₓR'ₓ (11),

wobei **R, R', R"** und **x** die bei der allgemeinen Formel (6) angegebenen Bedeutungen aufweisen.

Die Reaktivverdünner (R) können erst bei der Formulierung der Beschichtungsformulierungen (B) oder auch schon während der Synthese der Prepolymere (A) zugesetzt werden.

Die Beschichtungsformulierungen (B) können als Bindemittel ausschließlich die Prepolymere (A) und gegebenenfalls einen oder mehrere Reaktivverdünner (R) enthalten. Dabei können auch verschiedene Typen der Prepolymere (A) miteinander gemischt werden, z.B. Prepolymere (A) mit einem Rückgrat auf Basis von Poly(meth-)acrylaten, hergestellt unter Verwendung eines (Meth)Acrylsilans der allgemeinen Formel (7) mit Prepolymeren (A), die unter Verwendung eines Isocyanatosilans der allgemeinen Formel (9) hergestellt worden sind.

Ebenso können die Beschichtungsformulierungen (B) neben den Prepolymeren (A) und gegebenenfalls einem oder mehreren Reaktivverdünnern (B) auch noch weitere Bindemittel (D) ohne Alkoxysilanfunktionen der allgemeinen Formel (6) enthalten. Als Bindemittel (D) kommen dabei sämtliche aus der Lackherstellung bekannten Bindemittel in Betracht, z.B. Bindemittel auf Basis von Polyurethanen, Polyacrylaten oder Melaninharzen sowie auch Bindemittel, die über Alkoxysilangruppen, die nicht der allgemeinen Formel (6) entsprechen, verfügen.

Die Beschichtungsformulierungen (B) können lösungsmittelfrei oder auch lösungsmittelhaltig sein. Als Lösungsmittel kommen dabei sämtliche aus der Lackherstellung bekannten Lösungsmittel und Lösungsmittelmischungen in Betracht. In einer bevorzugten Ausführung der Erfindung sind die Beschichtungsformulierungen (B) lösungsmittelfrei.

Des weiteren können die Beschichtungsformulierungen (B) auch noch die in Lackformulierungen üblichen Additive und Zusätze. enthalten. Zu nennen wären hier u.a. Verlaufshilfsmittel, oberflächenaktive Substanzen, Haftvermittler, Lichtschutzmittel wie UV-Absorber und/oder Radikalfänger, Thixotropiermittel sowie Feststoffe wie z.B. Füllstoffe oder Nanopartikel. Zur Erzeugung der jeweils gewünschten Eigenschaftsprofile sowohl der Beschichtungsformulierungen (B) als auch der ausgehärteten Beschichtungen sind derartige Zusätze in der Regel unverzichtbar. Ebenso können die Beschichtungsformulierungen (B) selbstverständlich auch Pigmente enthalten.

Die ausgehärteten Beschichtungsformulierungen (B) verfügen über eine hohe Härte, so daß sie sich als kratzfeste Beschichtungen, z.B. als Kraftfahrzeugslackierungen, als kratzfeste Kunststoffbeschichtungen oder auch als kratzfeste Holzbeschichtungen eignen. Auf Grund ihrer moderaten Vernetzungsbedingungen lassen sich die Beschichtungsformulierungen (B) sowohl als OEM als auch als Reparaturlacke verwenden.

Durch den Einsatz von Prepolymeren (A) mit einer geringeren Dichte an Alkoxysilangruppen der allgemeinen Formel (6) lassen sich jedoch auch Beschichtungen erzeugen, die neben einer hohen Härte vor allem über eine hohe Elastizität und eine gute Abriebsbeständigkeit verfügen.

Ein besonderer Vorteil der Beschichtungsformulierungen (B) liegt in der einerseits steuerbaren, andererseits bei Bedarf sehr hohen Reaktivität der Prepolymere (A). So ist es durch die Zugabe geeigneter Härtungskatalysatoren .(K) möglich, zu Beschichtungsformulierungen (B) zu gelangen, die bereits bei 50-80 °C oder - besonders bevorzugt - sogar bereits bei Raumtemperatur (20 °C) vollständig aushärten. Durch den Einsatz verschiedener Härtungskatalysatortypen (K) und -konzentrationen kann die jeweilige Härtungsdauer dabei bedarfsgerecht zwischen wenigen Minuten und mehreren Stunden eingestellt werden.

Ein weiterer wichtiger Vorteil der - bei Bedarf - einstellbaren hohen Reaktivitäten der Prepolymere (A) liegt in der Tatsache, daß mit diesen Prepolymeren auch ethoxyvernetzende Beschichtungsformulierungen (B) möglich sind, d.h. Formulierungen, die über Ethoxysilylgruppen (R = Ethyl in der allgemeinen Formel (6)) verfügen. Diese Formulierungen setzen bei ihrer Aushärtung nur Ethanol und kein, bzw. nur geringe Mengen Methanol frei. Derartige ethoxyvernetzende Beschichtungsformulierungen (B) sind ebenfalls bevorzugt.

Die Beschichtungsformulierungen (B) können durch die üblichen Methoden, wie z.B. Spritzen, Tauchen, Fluten, Rakeln oder auch Schleuderverfahren auf das jeweilige Substrat aufgebracht werden.

Alle Symbole der vorstehenden Formeln weisen ihre Bedeutungen jeweils unabhängig voneinander auf. In allen Formeln ist das Siliciumatom vierwertig.

Soweit nicht anders angegeben sind in den folgenden Beispielen alle Mengen- und Prozentangaben auf das Gewicht bezogen, alle Drücke 0,10 MPa (abs.) und alle Temperaturen 20°C.

### Beispiel 1:

### Herstellung von Isocyanatomethyltrimethoxysilan:

Ausgehend von Chlormethyltrimethoxysilan wurde Methylcarbamatomethyltrimethoxysilan gemäß bekannter Verfahren (US 3,494,951) synthetisiert.

Dieses wurde in ein Quartz-Pyrolyserohr, das mit Quarzwolle gefüllt ist, im Argon-Gasstrom eingepumpt. Die Temperatur im Pyrolyserohr betrug zwischen 420 und 470 °C. Das Rohprodukt wurde am Ende der beheizten Strecke mit Hilfe eines Kühlers auskondensiert und gesammelt. Die farblose Flüssigkeit wurde durch Destillation unter reduziertem Druck gereinigt. Über Kopf ging bei ca. 88-90 °C (82 mbar) das gewünschte Produkt in über 99 %-iger Reinheit über, während im Sumpf das nicht umgesetzte Carbamat reisoliert werden konnte. Dieses wurde der Pyrolyse direkt wieder zugeführt.

Ausgehend von 56,9 g (273 mmol) Methylcarbamatomethyltrimethoxysilan wurden so 33,9 g (191 mmol) des gewünschten Produkts Isocyanatomethyltrimethoxysilan in einer Reinheit > 97 % enthalten. Dies entspricht einer Ausbeute von 70 % d. Th.

### Beispiel 2:

### Herstellung der Prepolymere (A) aus einem Polyol und einem Silan der allgemeinen Formel (9):

In einem 250 ml Reaktionsgefäß mit Rühr-, Kühl und Heizmöglichkeiten wurden 34,63 g (133,2 mmol) eines Polypropylenglycerins mit der mittleren Molmasse von 260 g/mol vorgelegt und durch 1-stündiges Erwärmen auf 100 °C im Membranpumpenvakuum entwässert. Anschließend wurde auf ca. 60 °C abgekühlt und bei dieser Temperatur wurden unter Stickstoff 0,025 g Dibutylzinndilaurat 64,49 g (400 mmol) Isocyanatomethyl-trimethoxysilan zugegeben. Die Temperatur sollte dabei nicht auf über 85 °C steigen. Nach Beendigung der Zugabe rührte man für weitere 60 min bei 60 °C Temperatur. Bei diesem Vorgehen reagierte nur die Isocyanatfunktion des Isocyanatomethyl-trimethoxysilans mit den OH-Gruppen des Polyols. Die - prinzipiell auch vorstellbare - Reaktion der OH-Funktionen des Polyols mit den Trimethoxysilylgruppen des Isocyanatomethyl-trimethoxysilans konnte - im Rahmen der Meßgenauigkeit (NMR, HPLC-MS) nicht gefunden werden.

In der resultierenden Prepolymermischung konnten IRspektroskopisch keine Isocyanatgruppen mehr nachgewiesen werden. Man erhielt eine klare, durchsichtige Mischung aus methoxysilanterminierten Prepolymeren, die eine Viskosität von ca. 2,9 Pas bei 20 °C aufwiesen. Ohne Zusatz eines weiteren Katalysators wies diese Mischung an der Luft eine Hautbildungszeit von mehreren Stunden auf, so daß sie problemlos gehandhabt und weiterverarbeitet werden konnte.

### Beispiel 3:

### Herstellung der Prepolymere (A) aus einem Polyol und einem Silan der allgemeinen Formel (9):

Es wurde so vorgegangen wie in Beispiel 2, jedoch wurden nur 47,27 g (266,7 mmol) Isocyanatomethyl-trimethoxysilan zugegeben. Bei dem stöchiometrischen Verhältnis zwischen dem Polypropylenglycerin und dem Isocyanatomethyl-trimethoxysilan konnten im Mittel nur zwei der drei OH-Funktionen des Polyols mit einem Isocyanatomethyl-trimethoxysilans unter Ausbildung einer Harnstoffeinheit reagieren.

In der resultierenden Prepolymermischung konnten IRspektroskopisch keine Isocyanatgruppen mehr nachgewiesen werden. Man erhielt eine klare, durchsichtige Mischung aus methoxysilanterminierten Prepolymeren, die eine Viskosität von ca. 20 Pas bei 20 °C aufwiesen. Ohne Zusatz eines weiteren Katalysators wies diese Mischung an der Luft eine Hautbildungszeit von mehreren Stunden auf, so daß sie problemlos gehandhabt und weiterverarbeitet werden konnte.

### Beispiel 4:

### Herstellung der Prepolymere (A) aus einem OH-terminierten Polyurethan und einem Silan der allgemeinen Formel (9):

In einem 250 ml Reaktionsgefäß mit Rühr-, Kühl und Heizmöglichkeiten wurden 30,00 g (115,4 mmol) eines Polypropylenglycerins mit der mittleren Molmasse von 260 g/mol vorgelegt und durch 1-stündiges Erwärmen auf 100 °C im Membranpumpenvakuum entwässert. Anschließend wurde auf ca. 60 °C abgekühlt und bei dieser Temperatur wurden unter Stickstoff 0,03 g Dibutylzinndilaurat.und 7,30 g (43,4 mmol) Hexamethylendiisocyanat (HDI) zugegeben. Die Temperatur sollte dabei nicht auf über 80 °C steigen. Nach Beendigung der Zugabe rührte man für weitere 60 min bei 60 °C Temperatur.

Diese Mischung wurde bei 60 °C unter Stickstoffatmosphäre zu 45,97 g (259,4 mmol) Isocyanatomethyl-trimethoxysilan gegeben, wobei die Temperatur wiederum bei unter 80 °C bleiben sollte. Anschließend rührte man für 60 min bei 60 °C. Bei diesem Vorgehen reagierte nur die Isocyanatfunktion des Isocyanatomethyl-trimethoxysilans mit den OH-Gruppen des Polyols. Die - prinzipiell auch vorstellbare - Reaktion der OH-Funktionen des Polyols mit den Trimethoxysilylgruppen des Isocyanatomethyl-trimethoxysilans konnte - im Rahmen der Meßgenauigkeit (NMR, HPLC-MS) nicht gefunden werden.

In der resultierenden Prepolymermischung konnten IRspektroskopisch keine Isocyanatgruppen mehr nachgewiesen werden. Man erhielt eine klare, durchsichtige Mischung, die eine Viskosität von ca. 9 Pas bei 20 °C aufwies. Ohne Zusatz eines weiteren Katalysators wies diese Mischung an der Luft eine Hautbildungszeit von mehreren Stunden auf, so daß sie problemlos problemlos gehandhabt und weiterverarbeitet werden konnte.

### Beispiel 5:

### Herstellung der Prepolymere (A) aus einem OH-terminierten Polyurethan und einem Silan der allgemeinen Formel (9):

Es wurde so vorgegangen wie in Beispiel 4, jedoch wurde im ersten Reaktionsschritt kein HDI eingesetzt, sondern statt dessen wurden 9,65 g (43,4 mmol)Isophoron-diisocyanat (IPDI) zugegeben.

In der resultierenden Prepolymermischung konnten IR-spektroskopisch keine Isocyanatgruppen mehr nachgewiesen werden. Man erhielt eine klare, durchsichtige Mischung, die eine Viskosität von ca. 43Pas bei 20 °C aufwies. Ohne Zusatz eines weiteren Katalysators wies diese Mischung an der Luft eine Hautbildungszeit von mehreren Stunden auf, so daß sie problemlos gehandhabt und weiterverarbeitet werden konnte.

### Beispiel 6:

### Herstellung von Prepolymere (A) mit Ethoxysilanfunktionen aus einem OH-terminierten Polyurethan und einem Silan der allgemeinen Formel (9):

Es wurde so vorgegangen wie in Beispiel 4, jedoch wurde im zweiten Reaktionsschritt kein Isocyanatomethyl-trimethoxysilan eingesetzt, sondern statt dessen wurden 56,89 g (259,4 mmol) Isocyanatomethyl-triethoxysilan zugegeben.

In der resultierenden Prepolymermischung konnten IRspektroskopisch keine Isocyanatgruppen mehr nachgewiesen werden. Man erhielt eine klare, durchsichtige Mischung, die eine Viskosität von ca. 30 Pas bei 20 °C aufwies. Ohne Zusatz eines weiteren Katalysators wies diese Mischung an der Luft eine Hautbildungszeit von mehreren Stunden auf, so daß sie problemlos gehandhabt und weiterverarbeitet werden konnte.

### Vergleichsbeispiel 1:

### Herstellung von nicht erfindungsgemäßen Prepolymeren (A) aus einem Polyol und einem γ-Isocyanatopropylsilan:

Es wurde so vorgegangen wie in Beispiel 2, jedoch wurde dabei kein Isocyanatomethyl-trimethoxysilan eingesetzt, sondern statt dessen wurden 82,11 g (400 mmol) γ-Isocyanatopropyltrimethoxysilan eingesetzt.

In der resultierenden Prepolymermischung konnten IR-spektroskopisch keine Isocyanatgruppen mehr nachgewiesen werden. Man erhielt eine klare, durchsichtige Mischung, die eine Viskosität von ca. 1,6 Pas bei 20 °C aufwies. Diese Mischung war kaum reaktiv und lies sich problemlos mehrere Stunden an der Luft handhaben.

### Vergleichsbeispiel 2 (nicht erfindungsgemäß):

### Herstellung von Prepolymeren (A) aus einem OH-terminierten Polyurethan und einem γ-Isocyanatopropylsilan:

Es wurde so vorgegangen wie in Beispiel 4, jedoch wurde im 2. Reaktionsschritt dabei kein Isocyanatomethyl-trimethoxysilan eingesetzt, sondern statt dessen wurden 53,25 g (259,4 mmol) γ-Isocyanatopropyl-trimethoxysilan eingesetzt.

In der resultierenden Prepolymermischung konnten IR-spektroskopisch keine Isocyanatgruppen mehr nachgewiesen werden. Man erhielt eine klare, durchsichtige Mischung, die eine Viskosität von ca. 32,32 Pas bei 20 °C aufwies. Diese Mischung war kaum reaktiv und lies sich problemlos mehrere Stunden an der Luft handhaben.

### Vergleichsbeispiel 3 (nicht erfindungsgemäß):

### Herstellung von Prepolymeren (A) aus einem NCO-terminierten Polyurethan und einem Aminosilan:

In einem 250 ml Reaktionsgefäß mit Rühr-, Kühl und Heizmöglichkeiten wurden 30 g (70,6 mmol) eines Polypropylenglycols mit einer mittleren Molmasse von 425 g/mol vorgelegt und durch 1-stündiges Erwärmen auf 100 °C im Membranpumpenvakuum entwässert. Anschließend wurde auf ca. 50 °C abgekühlt und bei dieser Temperatur wurden unter Stickstoff 23,75 g (141,2 mmol) Hexamethylendiisocyanat(HDI) so zugegeben, daß die Temperatur dabei nicht auf über 80 °C stieg. Nach Beendigung der Zugabe wurde für 15 min bei 80 °C gerührt.

Man kühlte auf etwa 50 °C ab und gab 5 ml Vinyltrimethoxysilan als Reaktivverdünner hinzu. Danach tropfte man 32,95 g (141,2 mmol) *N*-Cyclohexylaminomethyl-trimethoxysilan hinzu und rührte anschließend für 60 min bei 80 °C.

In der resultierenden Prepolymermischung konnten IRspektroskopisch keine Isocyanatgruppen mehr nachgewiesen werden. Allerdings lag die Viskosität trotz der Zugabe von Vinyltrimethoxysilan bereits bei >>100 Pas bei 20 °C. Außerdem war die Mischung so hochreaktiv, daß sie sich nicht mehr weiter verarbeiten lies. Beschichtungen ließen sich mit diesem Material nicht herstellen.

### Beispiel 6:

### Herstellung von Beschichtungen:

Die in den vorangegangenen Beispielen Prepolymere wurden entsprechend der Angaben in Tabelle 1 gegebenenfalls mit einem Lösungsmittel (2K-Verdünner; Fa. Herberts) oder mit Methyltrimethoxysilan (M-TMO),Vinyltrimethoxysilan (V-TMO) oder Tetraethoxysilan (TES) verdünnt, gegebenenfalls mit Bis-(2-dimethylaminoethyl)-ether als Härtungskatalysator versetzt. Alle in der Tabelle 1 angegebenen Mengenangaben beziehen sich auf die eingesetzten Gewichtsmengen.

Die fertigen Beschichtungsmassen wurden dann mit einem Filmziehgerät "Coatmaster 509 MC" der Firma Erichsen mit einer Naßfilmdicke von 120µm auf Alu-Prüfbleche (Pausch Messtechnik) aufgerakelt. Die dabei erhaltenen Lackschichten wurden entsprechend den Angaben in der Tabelle 1 bei Raumtemperatur oder bei 80 °C getrocknet.

Die Beschichtungen enthaltend Prepolymere (A) aus den Beispielen 2-5 waren dabei ausnahmslos nach 20-30 min vollständig durchgehärtet. Eine entsprechende Auflistung der hergestellten Beschichtungen findet sich in Tabelle 1. Dahingegen wurden aus den Prepolymeren der nicht erfindungsgemäßen Vergleichsbeispiele 1 und 2 - unabhängig von der Trocknungstemperatur und den eingesetzten Katalysatormengen - ausnahmslos nur Beschichtungen erhalten, die auch nach mehreren Tagen noch weich und klebrig waren.

**Tabelle 1:**

| Beschichtungsnummer | Prepolymer | Reaktivverdünner | Lösungsmittel | Katalysator | Härtungstemperatur |
|---|---|---|---|---|---|
| 2-80-Kat-RT | Bsp. 2 80 Tl. | V-TMO 20 Tl. | - | 0,5 Tl | RTaumtemperatur |
| 2-68-Kat-Rt | Bsp. 2 68 Tl. | V-TMO 32 Tl. | - | 0,5 T1 | Raumtemperatur |
| 2-80-Kat-80 | Bsp. 2 80 Tl. | V-TMO 20 Tl. | - | 0,5 Tl | 80 °C |
| 2-80L-Kat-Rt | Bsp. 2 80 Tl. | - | 2K-Verd. 20 Tl. | 0,5 Tl | Raumtemperatur |
| 3-80-Kat-Rt | Bsp. 3 80 Tl. | V-TMO 20 Tl. | - | 0,5 Tl. | 60 °C |
| 4-60-Rt | Bsp. 4 60 Tl. | V-TMO 40 T1. | - | - | Raumtemperatur |
| 4-60-60 | Bsp. 4 60 Tl. | V-TMO 40 Tl. | - | - | 60 °C |
| 4-80-Kat-Rt | Bsp. 4 80 Tl. | V-TMO 20 Tl. | - | 0,5 Tl. | Raumtemperatur |
| 4-60-Kat-Rt | Bsp. 4 60 Tl. | V-TMO 40 Tl. | - | 0,5 Tl. | Raumtemperatur |
| 4-60-Kat-60 | Bsp. 4 60 Tl. | V-TMO 40 Tl. | - | 0,5 Tl. | 60 °C |
| 4-60M-Kat-60 | Bsp. 4 60 Tl. | M-TMO 40 Tl. | - | 0,5 Tl. | 60 °C |
| 5-80-Kat-60 | Bsp. 5 80 Tl. | V-TMO 20 Tl. | - | 0,5 Tl. | 60 °C |
| 5-80L-Kat-60 | Bsp. 5 80 Tl. | - | 2K-Verd. 20 Tl. | 0,5 Tl. | 60 °C |
| 6-50-Kat-Rt | Bsp. 6 50 Tl | TES 25 Tl. | Ethanol 25 Tl. | 0,5 Tl | Raumtemperatur |

### Beispiel 7:

### Bestimmung der Bleistifthärten der Beschichtungen:

Die Bleistifthärten der oben beschriebenen Beschichtungen wurden in Anlehnung an die ISO 15184 durchgeführt. Dabei wurde die Härteprüfung mit einem Scratch Hardness Tester Model 291 der Firma Erichsen durchgeführt. Dabei wurden Bleistifte mit abgestuften Härtegraden bei einem festen Anstellwinkel und definierter Last über die Prüfschicht geschoben. Die Filmhärte wurde bestimmt durch die beiden Härtegrade an der Grenze zwischen Schreib- und Eindringeffekt.

Es wird in die folgenden Härtegrade unterteilt:
6B-5B-4B-3B-2B-B-HB-F-H-2H-3H-4H-5H-6H-7H-8H-9H weicher härter

Dabei wurden die entsprechenden Messungen sowohl mit Beschichtungen im Alter von 1 Tag als auch mit Beschichtungen im Alter von 2 Wochen durchgeführt. Die dabei erhaltenen Werte sind in der Tabelle 2 aufgelistet. In Beschichtungen mit einem Alter von über 2 Wochen konnten keine Veränderungen mehr nachgewiesen werden.

### Beispiel 8:

### Bestimmung der Lackhaftung auf Aluminium:

Die Haftung der erfindungsgemäßen Beschichtungen auf Aluminium und Stahl wurden in Anlehnung an die DIN 53151 durchgeführt.

Die Haftungsprüfung wurde durchgeführt mit einem Cross Hatch Cutter Model 295 mit 1mm Schneidenabstand der Firma Erichsen. Mit dem Gitterschnitt-Prüfer wurden 2 auf den Untergrund durchgehende Schnitte im rechten Winkel zueinander ausgeführt, so dass ein Gitter entstand. Mit einer Handbürste wurde in diagonaler Richtung je 5 mal hin und her gebürstet oder lose Teile mit Klebeband entfernt. Die bearbeitete Stelle wurde mit einer Lupe beurteilt.

Der Haftungsgrad wurde durch Vergleich nach verschiedenen Kennwerten eingestuft:
5B - Die Schnittränder sind vollkommen glatt, kein Teilstück des Lackes ist abgeplatzt.
4B - An den Schnittpunkten der Gitterlinien sind kleine Splitter des Lackes abgeplatzt. Ca. 5%
3B - Der Lack ist längs der Schnittränder und/oder an den Schnittpunkten der Gitterlinien abgeplatzt. Ca. 5 - 15%
2B - Der Lack ist längs der Schnittränder teilweise ganz oder in breiten Streifen abgeplatzt. Ca. 15 - 35%
1B - Der Lack ist längs der Schnittränder teilweise ganz oder in breiten Streifen abgeplatzt. Ca. 35 - 65%

Dabei wurden die entsprechenden Messungen sowohl mit Beschichtungen im Alter von 1 Tag als auch mit Beschichtungen im Alter von 2 Wochen durchgeführt. Die dabei erhaltenen Werte sind in der Tabelle 2 aufgelistet. In Beschichtungen mit einem Alter von über 2 Wochen konnten keine Veränderungen mehr nachgewiesen werden.

**Tabelle 2:**

| Beschichtungsnummer | Bleistifthärte nach 1 Tag | Bleistifthärte nach 14 Tagen | Haftungsgrad nach 1 Tag | Haftungsgrad nach 14 Tagen |
|---|---|---|---|---|
| 2-80-Kat-RT | 3H | 5H | 5B | 5B |
| 2-68-Kat-Rt | 3H | 4H | 5B | 5B |
| 2-80-Kat-80 | 4H | 5H | 5B | 5B |
| 2-80L-Kat-Rt | 3H | 3H | 4B | 4B |
| 3-80-Kat-60 | 3H | 3H | 5B | 5B |
| 4-60-Rt | B | H | 5B | 5B |
| 4-60-60 | F | H | 5B | 5B |
| 4-80-Kat-Rt | 2H | 3H | 5B | 5B |
| 4-60-Kat-Rt | 2H | 4H | 5B | 5B |
| 4-60-Kat-60 | 3H | 4H | 5B | 5B |
| 4-60M-Kat-60 | 3H | 3H | 5B | 5B |
| 5-80-Kat-60 | 3H | 4H | 5B | 5B |
| 5-80L-Kat-60 | 3H | 3H | 5B | 5B |
| 6-50-Kat-Rt | 3H | 4H | 5B | 5B |

Zum Vergleich wurden auch die Bleistifthärten von mehreren kommerziell verfügbaren Decklacken vermessen. Bei herkömmlichen Polyurethan-OEM-Lacken - hergestellt bei Einbrenntemperaturen von 130-150 °C wurden dabei Bleistifthärten zwischen HB und H gefunden. Bei herkömmlichen Reparaturlacken - hergestellt bei Trocknungstemperaturen von 80 °C - wurden Bleistifthärten zwischen B und HB gefunden.

## Patentansprüche

1. Verwendung von Beschichtungsformulierungen (B), die zu Beschichtungen mit einer Bleistifthärte nach ISO 15184 von mindestens HB aushärtbar sind, welche Prepolymere (A) enthalten, welche über Alkoxysilanfunktionen der allgemeinen Formel (6)
-X-CH₂-Si(OR)₃₋ₓR'ₓ (6)
verfügen, in der
**R** Wasserstoff, Alkyl-, Cycloalkyl- oder Arylrest mit jeweils 1 bis 6 C-Atomen, wobei die Kohlenstoffkette durch nicht benachbarte Sauerstoff-, Schwefel- oder NR"-Gruppen unterbrochen sein kann,
**R'** Alkyl-, Cycloalkyl-, Aryl- oder Arylalkylrest mit jeweils 1 bis 12 C-Atomen, wobei die Kohlenstoffkette durch nicht benachbarte Sauerstoff-, Schwefel- oder NR"-Gruppen unterbrochen sein kann,
**R"** Wasserstoff, Alkyl-, Cycloalkyl-, Aryl-, Aminoalkyl oder Aspartatsäureesterrest,
**X** Sauerstoff, Schwefel oder eine Gruppe der allgemeinen Formel (20) und
-O-CO-NR"- (20)
**x** 0 oder 1 bedeuten,
für kratzfeste Beschichtungen.

2. Verwendung nach Anspruch 1, wobei die Gruppe R ein Methyl- oder Ethylrest ist.

3. Verwendung nach Anspruch 1 oder 2, wobei die silanfunktionellen Prepolymere (A) unter Einsatz von Silanen der allgemeinen Formeln (7)und(8)
CH₂=CHW-CO-O-CH₂-Si(OR)₃₋ₓR'ₓ (7),
Propylenoxid-O-CH₂-Si(OR)₃₋ₓR'ₓ (8),
hergestellt werden, wobei **W** für eine CH₃-Gruppe oder Wasserstoff steht und **R, R'** und **x** die bei der allgemeinen Formel (6) gemäß Anspruch 1 beschriebenen Bedeutungen aufweisen.

4. Verwendung nach Anspruch 1 oder 2, wobei die silanfunktionellen Prepolymere (A) unter Einsatz von Silanen (A1) der allgemeinen Formel (9)
OCN-CH₂-Si(OR)₃₋ₓR'ₓ (9),
hergestellt werden, wobei **R, R'** und **x** die bei der allgemeinen Formel (6) gemäß Anspruch 1 beschriebenen Bedeutungen aufweisen.

5. Verwendung nach Anspruch 1 bis 4, wobei die Beschichtungsformulierungen (B) zur Erzielung einer schnellen Aushärtung der Prepolymeren (A) Katalysatoren (K) enthalten.

6. Verwendung nach Anspruch 5, wobei die Katalysatoren (K) ausgewählt werden aus Zinnkatalysatoren und tertiären Aminen.

7. Verwendung nach Anspruch 1 bis 6, wobei die Beschichtungsformulierungen (B) als Reaktivverdünner (R) niedermolekulare Verbindungen mit einer Viskosität von höchstens 5 Pas, bei 20°C enthalten, die über reaktive Alkoxysilylgruppen verfügen, über die sie während der Aushärtung der Beschichtung mit in das entstehende dreidimensionale Netzwerk eingebaut werden können.

8. Verwendung nach Anspruch 7, wobei die Reaktivverdünner (R) ausgewählt werden aus Alkyltrimethoxysilanen, Alkyltriethoxysilanen, Vinyltrimethoxysilan, Vinyltriethoxysilan, Phenyltrimethoxysilan, Phenyltriethoxysilan, Tetraethoxysilan, Teilhydrolysate dieser Verbindungen und Verbindungen der allgemeinen Formeln (10) oder (11)
R"-O-CH₂-Si(OR)₃₋ₓR'ₓ (10),
R"-O-CO-NH- CH₂-Si(OR)₃₋ₓR'ₓ (11),
wobei **R, R', R"** und **x** die bei der allgemeinen Formel (6) gemäß Anspruch 1 beschriebenen Bedeutungen aufweisen.

9. Verwendung nach Anspruch 1 bis 8, wobei die Beschichtungsformulierungen (B) zusätzlich Bindemittel (D) ohne Alkoxysilanfunktionen der allgemeinen Formel (6) enthalten.

10. Verwendung nach Anspruch 1 bis 9, wobei die Beschichtungsformulierungen (B) lösungsmittelfrei sind.

## Claims

1. Use of coating formulations (B) which are curable to coatings having a pencil hardness according to ISO 15184 of at least HB, which comprise prepolymers (A) which possess alkoxysilane functions of the general formula (6)
-X-CH₂-Si(OR)₃₋ₓR'ₓ (6)
in which
**R** is hydrogen, alkyl, cycloalkyl or aryl radical having in each case 1 to 6 carbon atoms, the carbon chain being uninterrupted or interrupted by non-adjacent oxygen, sulphur or NR" groups,
**R'** is alkyl, cycloalkyl, aryl or arylalkyl radical having in each case 1 to 12 carbon atoms, the carbon chain being uninterrupted or interrupted by nonadjacent oxygen, sulphur or NR" groups,
**R**" is hydrogen, alkyl, cycloalkyl, aryl, aminoalkyl or aspartate ester radical,
**X** is oxygen, sulphur or a group of the general formula (20)
-O-CO-NR"- (20)
and
**x** is 0 or 1
for scratch-resistant coatings.

2. Use according to Claim 1, wherein the group R is a methyl or ethyl radical.

3. Use according to Claim 1 or 2, wherein the silane-functional prepolymers (A) are prepared using silanes of the general formulae (7) and (8)
CH₂=CHW-CO-O-CH₂-Si(OR)₃₋ₓR'x (7),
propylene oxide-O-CH₂-Si(OR)₃₋ₓR'x (8),
where **W** is a CH₃ group or hydrogen and **R**, **R**' and **x** have the definitions described in connection with the general formula (6) according to Claim 1.

4. Use according to Claim 1 or 2, wherein the silane-functional prepolymers (A) are prepared using silanes (A1) of the general formula (9)
OCN-CH₂-Si(OR)₃₋ₓR'x (9),
where **R, R'** and **x** have the definitions described in connection with the general formula (6) according to Claim 1.

5. Use according to Claim 1 to 4, wherein the coating formulations (B) comprise catalysts (K) for the purpose of achieving rapid curing of the prepolymers (A).

6. Use according to Claim 5, wherein the catalysts (K) are selected from tin catalysts and tertiary amines.

7. Use according to Claim 1 to 6, wherein the coating formulations (B) as reactive diluents (R) comprise low molecular mass compounds having a viscosity of not more than 5 Pas at 20°C and possessing reactive alkoxysilyl groups via which they can be incorporated into the nascent three-dimensional network as the coating cures.

8. Use according to Claim 7, wherein the reactive diluents (R) are selected from alkyltrimethoxysilanes, alkyltriethoxysilanes, vinyltrimethoxysilane, vinyltriethoxysilane, phenyltrimethoxysilane, phenyltriethoxysilane, tetraethoxysilane, partial hydrolysates of these compounds, and compounds of the general formulae (10) or (11)
R"-O-CH₂-Si(OR)₃₋ₓR'x (10),
R"-O-CO-NH- CH₂-Si(OR)₃₋ₓR'x (11),
where **R**, **R**', **R**" and **x** have the definitions described in connection with the general formula (6) according to Claim 1.

9. Use according to Claim 1 to 8, wherein the coating formulations (B) further comprise binders (D) without alcoxysilane functions of the general formula (6).

10. Use according to Claim 1 to 9, wherein the coating formulations (B) are solvent-free.

## Revendications

1. Utilisation de formulations de revêtement (B) durcissables en revêtements présentant une dureté crayon selon la norme ISO 15184 d'au moins HB, qui contiennent des prépolymères (A) qui disposent de fonctions alcoxysilane de formule générale (6)
-X-CH₂-Si(OR)₃₋ₓR'ₓ (6)
dans laquelle
R signifie hydrogène, un radical alkyle, cycloalkyle ou aryle comprenant à chaque fois 1 à 6 atomes de carbone, la chaîne carbonée pouvant être interrompue par des groupements oxygène, soufre ou NR" non adjacents,
R' signifie un radical alkyle, cycloalkyle, aryle ou arylalkyle comprenant à chaque fois 1 à 12 atomes de carbone, la chaîne carbonée pouvant être interrompue par des groupements oxygène, soufre ou NR" non adjacents,
R" signifie hydrogène, un radical alkyle, cycloalkyle, aryle, aminoalkyle ou ester de l'acide aspartique,
X signifie oxygène, soufre ou un groupement de formule générale (20)
-O-CO-NR"- (20)
et
x signifie 0 ou 1,
pour des revêtements résistants aux griffes.

2. Utilisation selon la revendication 1, le groupement R étant un radical méthyle ou éthyle.

3. Utilisation selon la revendication 1 ou 2, les prépolymères (A) à fonctionnalité silane étant préparés en utilisant des silanes des formules générales (7) et (8)
CH₂=CHW-CO-O-CH₂-Si(OR)₃₋ₓR'ₓ (7),
oxyde de propylène-O-CH₂-Si(OR)₃₋ₓR'ₓ (8),
W représentant un groupement CH₃ ou hydrogène et R, R' et x présentant les significations décrites pour la formule générale (6) selon la revendication 1.

4. Utilisation selon la revendication 1 ou 2, les prépolymères (A) à fonctionnalité silane étant préparés en utilisant des silanes (A1) de formule générale (9)
OCN-CH₂-Si(OR)₃₋ₓR'ₓ (9),
R, R' et x présentant les significations décrites pour la formule générale (6) selon la revendication 1.

5. Utilisation selon les revendications 1 à 4, les formulations de revêtement (B) contenant des catalyseurs (K) pour obtenir un durcissement rapide des prépolymères (A).

6. Utilisation selon la revendication 5, les catalyseurs (K) étant choisis parmi les catalyseurs d'étain et les amines tertiaires.

7. Utilisation selon les revendications 1 à 6, les formulations de revêtement (B) contenant, comme diluants réactifs (R), des composés de bas poids moléculaire présentant une viscosité d'au maximum 5 Pa.s, à 20°C, qui disposent des groupements alcoxysilyle réactifs, via lesquels ils peuvent être incorporés dans le réseau tridimensionnel qui se forme pendant le durcissement du revêtement.

8. Utilisation selon la revendication 7, les diluants réactifs (R) étant choisis parmi les alkyltriméthoxysilanes, les alkyltriéthoxysilanes, le vinyltriméthoxysilane, le vinyltriéthoxysilane, le phényltriméthoxysilane, le phényltriéthoxysilane, le tétraéthoxysilane, les hydrolysats partiels de ces composés et les composés des formules générales (10) ou (11)
R"-O-CH₂-Si(OR)₃₋ₓR'ₓ (10),
R"-O-CO-NH-CH₂-Si(OR)₃₋ₓR'ₓ (11),
R, R', R" et x présentant les significations décrites pour la formule générale (6) selon la revendication 1.

9. Utilisation selon les revendications 1 à 8, les formulations de revêtement (B) contenant en plus des liants (D) sans fonctions alcoxysilane de formule générale (6).

10. Utilisation selon les revendications 1 à 9, les formulations de revêtement (B) étant exemptes de solvant.
